# EUROPEAN PATENT SPECIFICATION

(11) **EP 0 610 191 B1**
(45) Date of publication and mention of the grant of the patent: **23.10.1996**
(21) Application number: 92904914.6
(22) Date of filing: 13.02.1992
(51) Int. Cl.: G01L 9/14

(54) **APPARATUS FOR THE CONTROL OF PRESSURE DIFFERENCE**
GERÄT ZUR KONTROLLE DER DRUCKDIFFERENZ
APPAREIL DE SURVEILLANCE DE DIFFERENCE DE PRESSION

(30) Priority: 13.02.1991 FI 910694
(43) Date of publication of application: 17.08.1994
(73) Proprietor: PARKER HANNIFIN OY, SF-01740 Vantaa (FI)
(72) Inventor: KOIVULA, Tuomo, SF-31720 Urjalankyla (FI); LEPPÄNEN, Kari-Pekka, SF-31760 Urjala (FI); KANGASNIEMI, Marko, SF-37550 Moisio (FI)
(74) Representative: Barlow, Roy James
(86) International application number: FI9200040
(87) International publication number: WO9215002

(56) References cited:
- EP-A- 0 300 833
- EP-A- 0 314 125
- DE-A- 2 725 744
- GB-A- 2 189 887
- US-A- 4 172 971

## Description

The present invention relates to an apparatus for the control of pressure difference, the apparatus comprising a mechanical part consisting of a frame, a piston moving in relation to the frame, a spring loading the piston, a magnet linked to the piston, and communicating passages for coupling a pressure difference between the piston ends in such a manner that the pressure difference acts on the piston, and on a magnet moving together with it, against the load produced by the spring, and the apparatus additionally comprising an electric element for measuring the intensity of the magnetic field created by the magnet and for providing a signal at a piston position corresponding to a predetermined threshold value.

For example the operating condition of filters is controlled by monitoring the pressure difference. An increase in the pressure difference between the inlet and outlet sides of a filter is an indication of the clogging of the filter, and at a certain stage an indication of a need to replace the filter cartridge. Examples of filters the operation of which requires such monitoring include oil filters in hydraulic systems and filters for fuels and lubricants.

From FI Lay-Open Print 66693 there is known in particular a pressure indicator, connectable to a filter, in which a pressure difference is effective between the ends of a springloaded means equipped with a magnet, and against this means there is fitted an indicator means, also equipped with a spring and a magnet, which is held in place by the mutual pull between the magnets, working against the spring force. When the pressure difference increases, the first-mentioned means pushes away from the indicator means, whereby the mutual pull between the magnets which are gaining distance from each other respectively weakens, and at a certain point the spring force of the indicator means exceeds the mutual magnetic pull with the result that the indicator means, forced by the spring, shifts to the indicating position. The shift is thus a signal of an increase of the pressure difference to a level which requires replacement of the filter or other maintenance steps.

The above-mentioned prior-art indicator has the deficiency that the exceeding of the predetermined pressure difference limit can be observed visually only at the point to which the indicator is fitted. Relaying the signal to another place or converting it to another form would require additional devices which would make the indicator with already complicated mechanics even more complicated.

From EP application publication 0 300 833 there is known a pressure difference indicator having a sensor which includes, in addition to a magnet moving under the effect of pressure difference, also a HALL element which measures the intensity of the magnetic field and provides a signal at a certain position of the magnet. The signal is directed from the sensor to the indication and control part of the apparatus, which is presented as a separate element but can, according to the publication, also be installed in connection with the sensor. This system has, over that previously described, the advantage that the need for a separate, moving indicator means is avoided.

The object of the present invention is to provide a pressure difference control apparatus suitable for use in connection with filters and for other corresponding uses, the operation of which is based on direct conversion of a change in the magnetic field to an electric signal and which is compact and flexible in structure so that it can be installed in various congested location points. An apparatus according to the invention is characterized that the apparatus has, as a longitudinal extension to its mechanical part, an electrical part which includes the said element measuring the magnetic field intensity and which is equipped with leads relaying signals arriving at and leaving the apparatus, the leads being oriented in a direction transverse to the apparatus, and that the electrical part is linked to the frame of the mechanical part rotatably in such a manner that the direction of departure of the said leads can be adjusted by a rotational movement between the parts.

The apparatus according to the invention is especially advantageous in congested spaces in which there is often only one good, direction of departure available for the leads connected to the apparatus. When the communicating passages belonging to the apparatus, by means of which the pressure difference is coupled between the piston ends, compel the mechanical part of the apparatus to be secured in a certain position, the electrical part can thereafter be rotated freely to a position in which the direction of departure of the leads is correct.

The electrical part of the apparatus according to the invention may be located on that piston side which is coupled to a higher pressure, whereupon an increasing pressure difference moves the piston and the magnet connected to it away from the element measuring the intensity of the magnetic field, and the element provides a signal when the pressure difference has reached its threshold value and has decreased the magnetic field intensity to a predetermined value. However, also an opposite arrangement, in which an increasing pressure difference pushes the piston and the magnet closer to the electric element, is in principle equally possible.

The electrical part of the apparatus according to the invention can advantageously be equipped with a separate memory component which processes and stores information. In a control apparatus connected to a filter, the memory component may be arranged to measure the operating hours of the filter and to calculate from the signals provided by the electric element the number of times the filter becomes clogged, in which case it can be used for observing any shortening of the useful life of the filters.

The electrical part may also be equipped with one or more external signaling devices indicating the operating condition or measurement data. The measurement data may be, for example, information that the predetermined threshold value of the pressure difference being controlled has been exceeded. The signaling devices may be, for example, LED indicators of different colors, in which one color indicates the operating condition of the apparatus and the other the said measurement data.

According to the invention, the electrical part of the apparatus may further be equipped with means which monitor the temperature of the pressure medium. This enables the control of pressure difference to be limited to take place only above a predetermined minimum temperature, in which case error signals due to a temperature too low are avoided. For example, in oil filters the limit may be set at 30 °C, below which oil, owing to its viscosity, would disturb the monitoring of pressure difference according to the invention. Furthermore, it is possible to set for the temperature of the medium an upper limit, the apparatus providing an alarm signal when the limit is exceeded.

The element used in the apparatus according to the invention to measure the intensity of the magnetic field may consist of a HALL element, and the means monitoring the temperature of the pressure medium may consist of an NTC resistor.

The signal produced by the apparatus according to the invention may be converted to a visible form or, for example, to a sound signal in the control apparatus itself, or it may be relayed elsewhere as such via the leads, for example as a light signal or a sound signal to the control cabin of a vehicle equipped with a controllable hydraulic system.

The apparatus and method according to the invention are suitable not only for the said control of the operating condition of a filter but also for other purposes, such as the measuring of relative or absolute pressure, in which the reference is normal pressure or a vacuum.

The invention is described below in greater detail with the help of an example, with reference to the accompanying drawings, in which
Figure 1 depicts one pressure difference control apparatus according to the invention,
Figure 2 depicts the apparatus according to Figure 1, exploded and half in section, and
Figure 3 depicts a section showing the frame of the mechanical part of the apparatus, the piston equipped with a spring and a magnet, the linking of the electrical part of the apparatus to the mechanical part, and the electric element which measures the magnetic field and belongs to the electrical part.

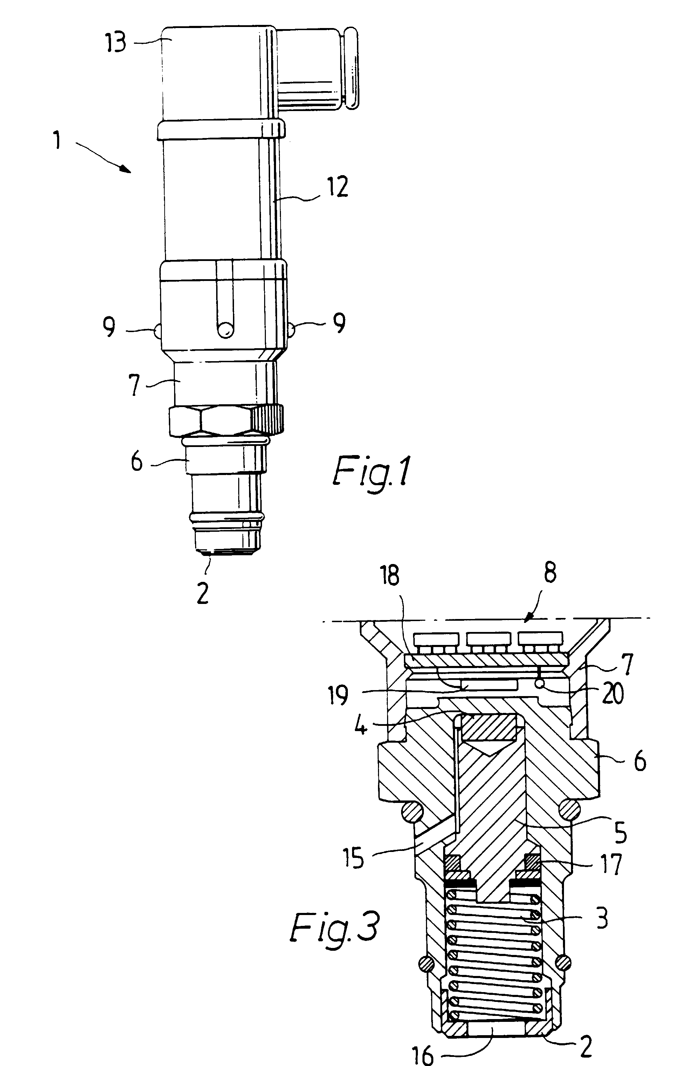

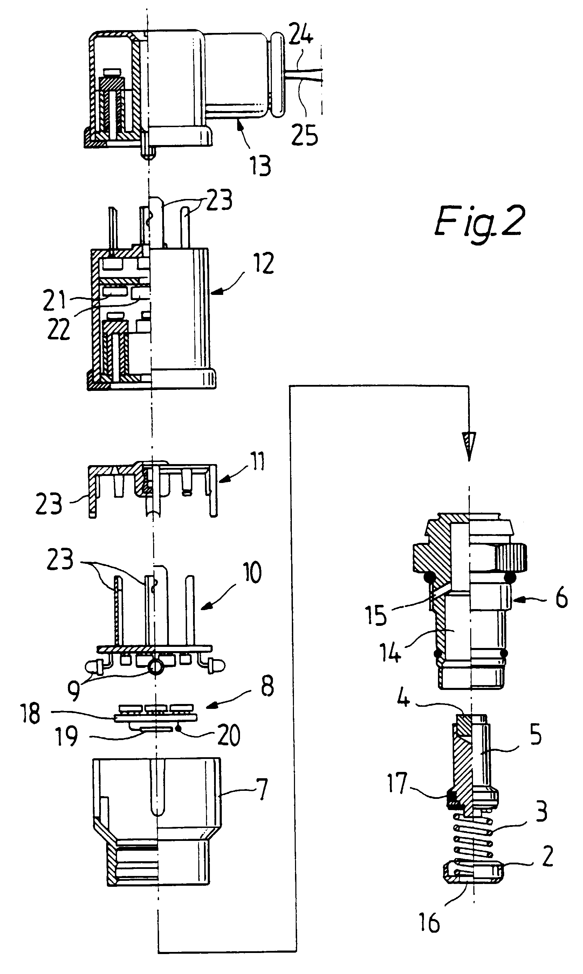

The pressure-difference control apparatus 1 shown in Figure 1 is assembled from components, which are shown in the order of assembly in Figure 2. The components comprise a rotatable adjustment ring 2, a spring 3, a piston 5 equipped with a magnet 4, and a frame 6, which together make up the mechanical part of the apparatus. In addition the components comprise, according to Figure 2, a casing 7 constituting an extension to the frame 6, a component 8 equipped with means measuring the intensity of the magnetic field and the temperature, a component 10 equipped with signaling devices 9, a cover component 11, a memory component 12, and a coupling component 13, which together make up the electrical part of the apparatus. The mechanical part and the electrical part are capable, at their interface, i.e. at the connection points between the frame 6 and the casing 7, of rotating freely in relation to each other.

The most important components of the control apparatus 1 are the piston 5 equipped with a spring 3 and a magnet 4, the frame 6 surrounding these, and component 8, the mutual positions of the components in the assembled apparatus being shown in Figure 3. The piston 5 and the compression spring 3 loading it are installed in a depression 14 in the frame 6 in such a manner that the spring presses the magnet 4 at the tip of the piston against the bottom of the depression. The preliminary compression of the spring 3 can be adjusted by means of an adjustment ring 2. The frame 6 is equipped with a bore 15 which serves as a communicating passage via which the higher pressure is applied to the said piston 5 end which is against the bottom of the depression 14. The opposite end of the piston 5, for its part, communicates via an aperture 16 in the adjustment ring 2 with the lower pressure. The piston 5 is additionally equipped with a gasket 17, which insulates the piston ends from each other. The pressure difference between the ends of the piston 5 thus tends to push the piston, together with its magnet, against the compressive force of the spring 3 from the bottom of the depression 14 in such a manner that the position of the magnet 4 at any given time is dependent on the pressure difference. The casing 7 attached as an extension to the frame 6 encloses a component 8 which is made up of a circuit board 18 with components attached to it. These components comprise a HALL element 19 which measures steplessly the intensity of the magnetic field generated by the magnet 4 and is located between the end of the frame part 6 and the circuit board. The HALL element 19 has been arranged to provide a signal at the moment when the pressure difference which has reached a certain threshold value between the ends of the piston 5 has transferred the magnet 4 in the depression 14 to a point corresponding to a predetermined magnetic field intensity. When the control apparatus is connected to a filter, the signal may mean, for example, that a soiled and clogged filter cartridge must be replaced. Besides the HALL element 19, component 8 comprises as an essential component an NTC resistor 20, which measures the temperature. This resistor can be arranged to operate so that the pressure difference control is limited to take place only above a predetermined minimum temperature, for example 30 °C in connection with an oil filter. Furthermore, the indicator may be arranged to provide a signal when the temperature rises above a predetermined maximum value, which is preferably 70 °C in an oil filter.

The signaling devices 9 shown in Figures 1 and 2 may be, for example, LED indicators. The signal light turning on in them is an indication that the apparatus is in an operating condition.

In accordance with Figure 2, the memory component 12 comprising memory circuits 21 and a microprocessor 22 is intended for processing and storing information accumulated during the operation of the control apparatus. The memory component 12 can be arranged to be connectable to an external read device (not shown).

Components 10-13 of the control apparatus are coupled to each other by connector studs 23, which connect the said parts rigidly to each other and which relay to the apparatus the operating voltage brought in via leads 24 and relay signals, received from the apparatus, via the connection part 13 to leads 25 leading to outside the apparatus.

The HALL element 19 measuring the intensity of the magnetic field can, according to the invention, be arranged to operate, for example, in such a manner that at a minimum value corresponding to a predetermined pressure difference it turns on the LED indicators 9 on the exterior casing of the apparatus. This indicates that the apparatus is in operating condition. When the pressure difference exceeds a predetermined higher threshold value, the element 19 provides a signal which is directed via leads 25 to an external indicator, provided that the temperature-monitoring NTC resistor 20 does not prevent this. This signal may, for example, be a sign that a clogged filter cartridge in the filter should be replaced. If, however, the pressure difference continues to increase, it may have another, higher threshold value, which represents a level deemed to be dangerous. When this threshold value is exceeded, the HALL element provides a signal from which the information can be stored in the memory component 12 of the apparatus.

The operation of the temperature-monitoring NTC resistor 20 belonging to the apparatus may preferably be arranged in such a way that the resistor circuit provides a control signal at two different temperatures. The lower temperature is a minimum temperature, below which the operation of the HALL element 19 is cut off or at least the access of the signals produced by the element to outside the apparatus is prevented. At the higher temperature, for its part, the signal obtained can be led out of the apparatus as a sign of excessive heating up of the medium, in addition to which this signal may also be stored in the memory component 12 of the apparatus.

In addition to counting the signals produced by the said HALL element 19 and the NTC resistor 20, the memory component 12 can advantageously be used for measuring the total operating hours of the apparatus and separately the operating hours in different situations, or starting from certain steps, such as the replacement of a filter cartridge.

For an expert in the art it is clear that the different applications of the invention are not limited to that presented above by way of example; they may vary within the scope of the accompanying patent claims. For example, the temperature-monitoring NTC resistor may be installed not only in the vicinity of the element which measures the intensity of the magnetic field but also in direct contact with the pressure medium, for example at the lower end of the control apparatus.

## Claims

1. An apparatus (1) for the control of pressure difference, which apparatus comprises a mechanical part which includes a frame (6), a piston (5) moving relative to the frame, a spring (3) which loads the piston, a magnet (4) linked to the piston, and communicating passages (15, 16) for coupling a pressure difference between the ends of the piston in such a manner that the pressure difference acts on the piston, and on the magnet moving together with it, against the load caused by the spring and which apparatus additionally comprises an electric element (19) for measuring the intensity of the magnetic field produced by the magnet and for providing a signal at a piston position corresponding to a predetermined threshold value, **characterized** in that the apparatus has, as a longitudinal extension to the mechanical part, an electrical part which includes the said element (19) measuring the intensity of the magnetic field and which is equipped with leads (24, 25) relaying signals arriving at and leaving the apparatus, the leads being oriented in a direction transverse to the apparatus, and that the electrical part is linked to the frame (6) of the mechanical part rotatably in such a way that the direction of departure of the said leads can be adjusted by a rotational movement between the said parts.

2. An apparatus according to Claim 1, **characterized** in that the electrical part includes a memory component (12) which processes and stores information.

3. An apparatus according to Claim 1 or 2, **characterized** in that the electrical part is equipped with one or more external signaling devices (9) indicating the operating condition or measurement data.

4. An apparatus according to any of Claims 1-3, **characterized** in that the electrical part comprises means (20) for monitoring the temperature of the pressure medium in such a manner that the control of the pressure difference can be limited to take place only above a predetermined minimum temperature.

## Patentansprüche

1. Vorrichtung (1) zum Kontrollieren der Druckdifferenz, wobei die Vorrichtung einen mechanischen Teil umfaßt, der einen Rahmen (6) aufweist, einen zu dem Rahmen sich relativ bewegenden Kolben (5), eine den Kolben belastende Feder (3), einen mit dem Kolben verbundenen Magneten (4) und Verbindungsdurchgänge (15, 16) zum Koppeln einer Druckdifferenz zwischen den Enden des Kolben derart, daß die Druckdifferenz auf den Kolben und auf den Magneten einwirkt, der sich zusammen mit diesem gegen die von der Feder bewirkte Last bewegt, und wobei die Vorrichtung außerdem ein elektrisches Element (19) zum Messen der Intensität des magnetischen Feldes umfaßt, das durch den Magneten erzeugt wird, und zum Liefern eines Signales bei einer Kolbenposition, die einem vorbestimmten Schwellenwert entspricht,
**dadurch gekennzeichnet,**
daß die Vorrichtung als eine Längsverlängerung zu dem mechanischen Teil einen elektrischen Teil aufweist, der das die Intensität des magnetischen Feldes messende Element (19) aufweist und der mit Leitungen (24, 25) versehen ist, die bei der Vorrichtung ankommende und die Vorrichtung verlassende Signale übertragen, wobei die Leitungen in einer Richtung quer zu der Vorrichtung orientiert sind und dadurch, daß der elektrische Teil mit dem Rahmen (6) des mechanischen Teils drehbar verbunden ist derart, daß die Austrittsrichtung der Leitungen durch eine Drehbewegung zwischen den Teilen eingestellt werden kann.

2. Vorrichtung nach Anspruch 1,
dadurch gekennzeichnet,
daß der elektrische Teil ein Speicherbauteil (12) umfaßt, das Informationen verarbeitet und speichert.

3. Vorrichtung nach Anspruch 1 oder 2,
**dadurch gekennzeichnet**,
daß der elektrische Teil mit einer oder mehreren externen Signalvorrichtungen (9) versehen ist, die den Betriebszustand oder Meßdaten anzeigen.

4. Vorrichtung nach einem der Ansprüche 1 bis 3,
**dadurch gekennzeichnet,**
daß der elektrische Teil Mittel (20) umfaßt zum Überwachen der Temperatur des Druckmediums derart, daß die Kontrolle der Druckdifferenz darauf beschränkt sein kann, lediglich über einer vorbestimmten Minimaltemperatur stattzufinden.

## Revendications

1. Appareil (1) pour la commande de différence de pression, l'appareil comportant une partie mécanique qui comprend un corps (6), un piston (5) se déplaçant par rapport au corps, un ressort (3) qui charge le piston, un aimant (4) lié au piston, et des passages de communication (15, 16) destinés à relier une différence de pression entre les extrémités du piston d'une manière telle que la différence de pression agit sur le piston, et sur l'aimant se déplaçant avec lui, à l'encontre de la charge produite par le ressort, l'appareil comportant de manière additionnelle un élément électrique (19) destiné à mesurer l'intensité du champ magnétique créé par l'aimant et destiné à délivrer un signal dans une position du piston correspondant à une valeur de seuil prédéterminée, caractérisé en ce que l'appareil possède, en tant qu'extension longitudinale de sa partie mécanique, une partie électrique qui comprend ledit élément (19) mesurant l'intensité du champ magnétique et qui est équipée de fils (24, 25) transmettant des signaux arrivant dans et quittant l'appareil, les fils étant orientés dans une direction transversale à l'appareil, et en ce que la partie électrique est liée au corps (6) de la partie mécanique d'une façon rotative d'une manière telle que la direction de départ desdits fils peut être ajustée par un mouvement de rotation entre lesdites parties.

2. Appareil selon la revendication 1, caractérisé en ce que la partie électrique comprend un composant de mémoire (12) qui traite et stocke une information.

3. Appareil selon la revendication 1 ou 2, caractérisé en ce que la partie électrique est équipée d'un ou plusieurs dispositifs de signalisation externes (9) indiquant la condition de fonctionnement ou des données de mesure.

4. Appareil selon l'une quelconque des revendications 1 à 3, caractérisé en ce que la partie électrique comprend des moyens (20) destinés à contrôler la température du fluide sous pression d'une manière telle que la commande de la différence de pression peut être limitée uniquement à une action au-dessus d'une température minimum prédéterminée.
